# EUROPEAN PATENT APPLICATION

(11) **EP 4 632 869 A2**
(43) Date of publication of application: **15.10.2025**
(21) Application number: 25168838.8
(22) Date of filing: 07.04.2025
(51) Int. Cl.: H01M 10/42, H01M 50/609, H01M 50/691, H01M 10/48, H01M 10/052, H01M 10/44

(54) **APPARATUS FOR MEASURING GAS PRESSURE OF SECONDARY BATTERIES**

(30) Priority: 08.04.2024 KR 20240047678
(71) Applicant: SAMSUNG SDI CO., LTD., Yongin-si, Gyeonggi-do 17084 (KR)
(72) Inventor: LEE, ILBOK, 17084 Yongin-Si Gyeonggi-do (KR); KIM, BYEONGSU, 17084 Yongin-Si Gyeonggi-do (KR); KIM, HYEONGJUN, 17084 Yongin-Si Gyeonggi-do (KR); JUNG, DONGWOO, 17084 Yongin-Si Gyeonggi-do (KR)
(74) Representative: Gulde & Partner

(57) **Abstract**

An apparatus (120) is provided for measuring gas pressure of a secondary battery. In order to prevent spilling of liquid electrolyte while measuring the pressure of the gas of secondary battery, the apparatus (120) includes a buffer (122) configured to be coupled to a liquid injection port of the secondary battery and configured to store an electrolyte (114) discharged from an inside of the secondary battery, a gas storage (124) connected to the buffer (122) and configured to store gas discharged from the inside of the secondary battery, and a gas pressure measurement device (126) connected to the gas storage (124) and configured to measure a pressure of the gas.

## Description

### BACKGROUND

### Field

Aspects of embodiments of the present disclosure relate to an apparatus and method for measuring gas pressure of secondary batteries.

### Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

Various types of gases may be generated in reactions that occur within secondary batteries. The generation of gases may adversely affect cell lifespan. For example, the thickness of secondary batteries may be deformed or changed by generated gases. Accordingly, it is important to measure pressures of gases generated in secondary batteries and determine gas characteristics. However, in a formation process of a secondary battery, a large amount of gases may be generated due to a solid electrolyte interphase (SEI) film formation reaction of secondary batteries. In this case, an electrolyte overflows through a liquid injection port of a secondary battery, making it difficult to measure gas pressure with a conventional apparatus for measuring gas pressure.

The above information disclosed in this Background section is for enhancement of understanding of the background of the present disclosure, and therefore, it may contain information that does not constitute related (or prior) art.

### SUMMARY

Embodiments of the present disclosure provide an apparatus and method for measuring gas pressure of secondary batteries.

These and other aspects and features of the present disclosure will be described in or will be apparent from the following description of embodiments of the present disclosure.

According to the invention, an apparatus for measuring gas pressure of a secondary battery according to claim 1 is provided. Disclosure regarding the method is merely useful for the understanding of the apparatus. The apparatus for measuring gas pressure of a secondary battery includes a buffer configured to be coupled to a liquid injection port of the secondary battery and configured to store an electrolyte discharged from an inside of the secondary battery, a gas storage connected to the buffer and configured to store gas discharged from the inside of the secondary battery, and a gas pressure measurement device connected to the gas storage and configured to measure a pressure of the gas.

According to the invention, gas and/or liquid electrolyte escaping the secondary battery can be collected and separated from each other by the buffer, wherein the gas pressure inside the secondary battery may press the gas and/or liquid into the buffer and also exert pressure onto the gas in the gas storage, such that the gas pressure measurement device may be protected from liquid electrolyte and able to measure the pressure of the gas in the gas storage generated by the gas pressure in the secondary battery.

According to an embodiment, in an operative configuration with the buffer coupled to the second battery, the gas pressure measurement device is positioned higher than the buffer.

An advantage of this embodiment may be that liquid electrolyte and gas are readily separated by gravity.

According to an embodiment, the apparatus further includes a first connection pipe connected to the gas storage, a first valve configured to open and close the first connection pipe, and a gas collection device connected to the first connection pipe.

An advantage of this embodiment may be that flow of gas into the gas storage can be stopped, for example in order to separate the apparatus from the secondary battery and/or to connect the apparatus to another secondary battery.

According to an embodiment, the gas collection device is detachably attached to the first connection pipe.

An advantage of this embodiment may be that dispensable gas collected in the gas collection device can be removed with the gas collection device while hindering the gas to enter the environment. Additionally or alternatively, the gas collection device can be replaceable with another gas collection device to be filled with gas. Additionally or alternatively, the gas collection device can move to another apparatus, e.g. to analyze the gas in the gas collection device.

According to an embodiment, the apparatus further includes a second connection pipe connected to the gas storage, a second valve configured to open and close the second connection pipe, and a vacuum pump connected to the second connection pipe.

An advantage of this embodiment may be that gas can be removed from the second connection pipe and possibly also from the gas storage and/or the buffer, e.g. for transportation to another gas collection device or for emptying the gas from the second connection pipe and possibly also from the gas storage and/or the buffer before disconnecting the apparatus from or connecting the apparatus to the secondary battery.

According to an embodiment, the vacuum pump is configured to discharge the gas stored in the gas storage to outside of the apparatus.

An advantage of this embodiment may be that can be transported to further facilities for storing, reusing and/or treating the gas.

According to an embodiment, the secondary battery has a capacity of up to 10 Ah, 20 Ah, 30 A h, 40 Ah, 50 Ah, 60 Ah, 70 Ah, 80 Ah, 90 Ah, 100 Ah, 125 Ah, 150 Ah, 175 Ah, 200 Ah or more. In particular, the apparatus may be adapted to be connected to and measure pressure of gas inside such a secondar battery.

An advantage of this embodiment may be that gas pressures inside of secondary batteries with a wide power range can be measures.

According to an embodiment, the gas storage is detachably attached to the buffer. The gas storage may be configured to be coupled to the liquid injection port of the secondary battery when the buffer is detached from the gas storage.

An advantage of this embodiment may be that the apparatus can be used easier without the buffer in case liquid is not expected to escape the secondary battery via the liquid injection port and into the apparatus.

According to an embodiment, a volume of the gas storage is less than a volume of the buffer.

An advantage of this embodiment may be that gas pressure in the gas storage for the same amount of gas is higher, thereby preventing liquid electrolyte spilling out of the buffer and into the gas storage, as pressure equilibrium between pressure in the secondar battery and the gas storage is reached faster.

According to an embodiment, a radius of the buffer is configured to be less than a distance between the liquid injection port of the secondary battery and a terminal of the secondary battery.

An advantage of this embodiment may be that the amount of liquid electrolyte storable in the buffer can be comparably great, wherein the buffer can be connected to the terminal easily.

According to an embodiment, the buffer is configured to inject electrolyte stored in the buffer into the secondary battery through the liquid injection port.

An advantage of this embodiment may be that the apparatus can be usable to introduce or reintroduce liquid electrolyte into the secondary battery.

According to an embodiment, the apparatus further includes controller configured to control a current applied to the secondary battery based on the pressure of the gas measured by the gas pressure measurement device.

An advantage of this embodiment may be that the apparatus can be used to support formation of the secondary battery while considering the pressure, such that less equipment may be required.

According to an embodiment, the connection pipe is a first connection pipe and the valve is a first valve. The apparatus may further include a second connection pipe connected to the gas storage, a second valve configured to open and close the second connection pipe, a vacuum pump connected to the second connection pipe, and a controller, which may be the above mentioned controller or another controller, configured to control the first valve, the second valve, and the vacuum pump, wherein the controller is configured to close the first valve and the second valve in a first mode and receive the pressure of the gas measured by the gas pressure measurement device.

An advantage of this embodiment may be that the volume for receiving gas is limited by the valves, which may improve reliability of the pressure measurement.

According to an embodiment, the controller is configured to collect the gas in the gas collection device by opening the first valve and closing the second valve in a second mode.

An advantage of this embodiment may be that gas only flows into the gas collection device and is hindered from flowing beyond the second valve.

According to an embodiment, the controller is configured to discharge the gas to outside of the apparatus by closing the first valve, opening the second valve and operating the vacuum pump in a third mode.

An advantage of this embodiment may be that the gas storge can be emptied by the vacuum pump swiftly without the need to also evacuate the volume beyond the first valve.

A method for measuring gas pressure of a secondary battery of the present disclosure includes coupling a buffer to an inlet of the secondary battery, the buffer being configured to store an electrolyte, performing a formation process of the secondary battery, storing gas discharged from inside of the secondary battery in a gas storage connected to the buffer, and measuring a pressure of the gas by a gas pressure measurement device connected to the gas storage.

According to an embodiment, the method further includes comprising controlling a current applied to the secondary battery, based on the pressure of the gas measured by the gas pressure measurement device.

According to an embodiment, the method further includes opening a first valve configured to open and close a first connection pipe connected to the gas storage, and collecting the gas in a gas collection device connected to the first connection pipe.

According to an embodiment, the method further closing the first valve, and
detaching the gas collection device from the first connection pipe.

According to an embodiment, the method further opening a second valve configured to open and close a second connection pipe connected to the gas storage, and discharging the gas by a vacuum pump connected to the second connection pipe.

According to some embodiments of the present disclosure, gas pressure may be measured through a single device, gas may be conveniently collected, and gas may be easily discharged by using the vacuum pump. In some embodiments, the electrolyte discharged from the inside of the secondary battery during the formation process may be received in the buffer. Accordingly, the gas pressure measurement device may measure the pressure of the gas discharged from the secondary battery without being contaminated by the electrolyte.

According to some embodiments of the present disclosure, the gas pressure during the formation process may be measured, and the conditions for the formation process may be set based on the measured gas pressure. Accordingly, accidents due to high gas pressure may be prevented in advance, and the formation process may be performed under optimal conditions.

These and other aspects and features of the present disclosure will be described in or will be apparent from the following description of embodiments of the present disclosure.

However, aspects and features of the present disclosure are not limited to those described above, and other aspects and features not mentioned will be clearly understood by a person skilled in the art from the detailed description provided below.

### BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 illustrates an example of an apparatus for measuring gas pressure according to embodiments of the present disclosure.
FIG. 2 illustrates an example of collecting gas stored in the gas storage according to embodiments of the present disclosure.
FIG. 3 illustrates an example of attaching and detaching the gas collection device according to embodiments of the present disclosure.
FIG. 4 illustrates an example of discharging gas stored in the gas storage to the outside according to embodiments of the present disclosure.
FIG. 5 illustrates an example in which the electrolyte is injected into the secondary battery according to embodiments of the present disclosure.
FIG. 6 illustrates an example in which the controller controls the current applied to the secondary battery according to embodiments of the present disclosure.
FIG. 7 illustrates an example of the buffer according to embodiments of the present disclosure.
FIG. 8 illustrates a flowchart showing an example of a gas pressure measurement method according to embodiments of the present disclosure.
FIG. 9 illustrates a flowchart showing an example of a gas collection method according to embodiments of the present disclosure.
FIG. 10 illustrates a flowchart showing an example of a gas discharge method according to embodiments of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when a layer or element is referred to as being "between" two layers, it can be the only layer between the two layers, or one or more intervening layers may also be present. It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of local patent laws.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

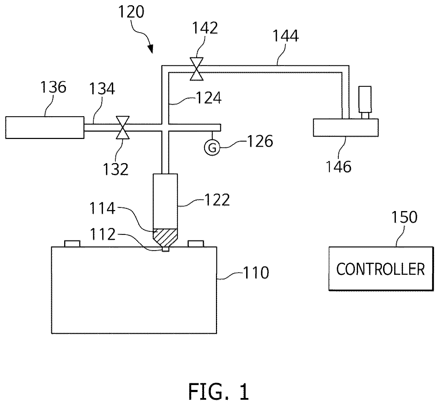

FIG. 1 illustrates an example of an apparatus 120 for measuring gas pressure according to embodiments of the present disclosure. Referring to FIG. 1, the apparatus 120 for measuring gas pressure may include a buffer 122 coupled to a liquid injection port 112 of a secondary battery 110, a gas storage 124 connected to the buffer 122, and a gas pressure measurement device 126 connected to the gas storage 124 and configured to measure gas pressure. The secondary battery 110 may be a medium-and-large secondary battery, and the capacity of the secondary battery 110 may be 40 Ah or more, but the present disclosure is not limited thereto.

In some embodiments, the buffer 122 may store an electrolyte 114 discharged from the inside of the secondary battery 110. The electrolyte 114 may refer to a liquid that overflows inside the secondary battery 110 due to gas generated during the process of making the secondary battery 110. To this end, the buffer 122 may be coupled/connected to the upper portion of the secondary battery 110. The volume of the buffer 122 may be 20 ml to 120 ml so as to receive all of the electrolyte 114, but the present disclosure is not limited thereto.

In some embodiments, the gas storage 124 may store or receive gas discharged from the inside of the secondary battery 110. The volume of the gas storage 124 may be smaller than the volume of the buffer 122. For example, the volume of the gas storage 124 may be 5 ml to 20 ml, but the present disclosure is not limited thereto.

In some embodiments, the gas pressure measurement device 126 may be connected to the gas storage 124 and configured to measure the pressure of the gas discharged from the inside of the secondary battery 110. The gas pressure measurement device 126 may be a digital pressure gauge that measures the pressure of the gas, but the present disclosure is not limited thereto. In some embodiments, the gas pressure measurement device 126 may be disposed at a higher position than the buffer 122 with respect to the surface on which the battery is placed. Accordingly, the electrolyte 114 is received in the buffer 122 disposed lower than the gas pressure measurement device 126, thereby preventing the electrolyte 114 from contaminating the gas pressure measurement device 126.

In some embodiments, the gas storage 124 may be detachably attached to the buffer 122, for example, by bolting. When the buffer 122 is detached, the gas storage 124 may be coupled to the liquid injection port 112 of the secondary battery 110. Because the gas storage 124 is directly coupled to the liquid injection port 112, the gas pressure measurement device 126 may more accurately measure the pressure of the gas stored in the gas storage 124.

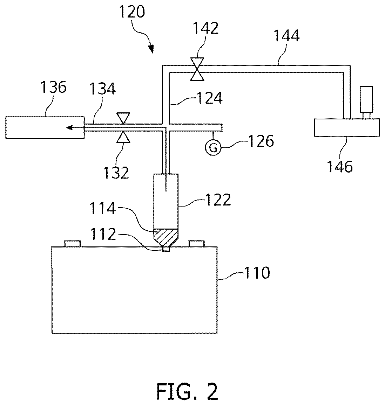

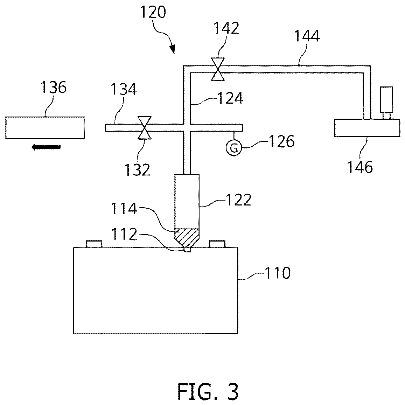

In some embodiments, the apparatus 120 for measuring gas pressure may further include a first connection pipe 134 connected to the gas storage 124, a first valve 132 configured to open and close the first connection pipe 134, and a gas collection device 136 connected to the first connection pipe 134. The gas collection device 136 may be detachably attached to the first connection pipe 134. An example of collecting gas is described in detail below with reference to FIGS. 2 and 3.

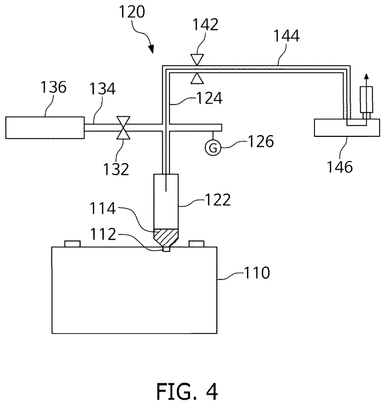

In some embodiments, the apparatus 120 for measuring gas pressure may further include a second connection pipe 144 connected to the gas storage 124, a second valve 142 configured to open and close the second connection pipe 144, and a vacuum pump 146 connected to the second connection pipe 144. The vacuum pump 146 may discharge the gas stored in the gas storage 124 to outside of the apparatus 120. An example of discharging gas is described in detail below with reference to FIG. 4.

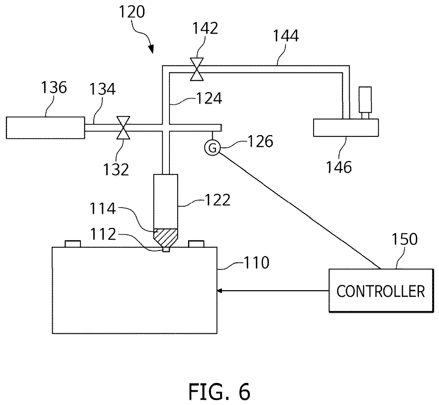

In some embodiments, the apparatus 120 for measuring gas pressure may further include a controller 150 configured to control a current applied to the secondary battery 110 based on the pressure of the gas measured by the gas pressure measurement device 126. In some embodiments, the controller 150 may control the opening and closing of the first valve 132 and the second valve 142. In some embodiments, the controller 150 may control the operation of the vacuum pump 146. Although the connection state of the controller 150 is not illustrated in FIG. 1, the controller 150 may be directly or indirectly connected to the secondary battery 110, the gas pressure measurement device 126, the first valve 132, the second valve 142, and the vacuum pump 146 in a wired or wireless manner. An example in which the controller 150 controls the current applied to the secondary battery 110 is described in detail below with reference to FIG. 6.

The positions of the gas collection device 136 and the vacuum pump 146 illustrated in FIG. 1 are only an example and are not limited thereto. The gas collection device 136 and the vacuum pump 146 may be connected to the gas storage 124 and disposed in various positions.

In some embodiments, the controller 150 may close the first valve 132 and the second valve 142 in a first mode and receive the pressure of the gas measured by the gas pressure measurement device 126. In some embodiments, the controller 150 may collect gas in the gas collection device 136 by opening the first valve 132 and closing the second valve 142 in a second mode. In some embodiments, the controller 150 may discharge the gas to outside of the apparatus 120 by closing the first valve 132, opening the second valve 142, and operating the vacuum pump 146 in a third mode. With this configuration, gas pressure may be measured through a single device, gas may be conveniently collected, and gas may be easily discharged to the outside by using a vacuum pump. In some embodiments, the electrolyte discharged from the inside of the secondary battery during the formation process may be received in the buffer. Accordingly, the gas pressure measurement device may measure the pressure of the gas discharged from the secondary battery without being contaminated by the electrolyte.

FIG. 2 illustrates an example of collecting gas stored in the gas storage 124 according to embodiments of the present disclosure. FIG. 3 illustrates an example of attaching and detaching the gas collection device 136 according to embodiments of the present disclosure. In some embodiments, gas may be discharged from the inside of the secondary battery 110. For example, during the formation process of the secondary battery 110, gas may be discharged from the inside of the secondary battery 110. The gas may be stored in the gas storage 124 by passing through the buffer 122.

In some embodiments, the first valve 132 configured to open and close the first connection pipe 134 may be opened, and the second valve 142 may be closed. In this case, the gas stored in the gas storage 124 may be collected in the gas collection device 136 through the first connection pipe 134. Thereafter, the first valve 132 may be closed again, and the gas collection device 136 may be detached from the first connection pipe 134 in a sealed state. The gas collected in the gas collection device 136 may be used in an external device for component investigation.

Although not illustrated in FIG. 3, one end of the first connection pipe 134 to which the gas collection device 136 is connected may be closed with a rubber seal or the like.

FIG. 4 illustrates an example of discharging gas stored in the gas storage 124 to outside of the apparatus 120 according to embodiments of the present disclosure. In some embodiments, gas may be discharged from the inside of the secondary battery 110. The gas may be stored in the gas storage 124 by passing through the buffer 122.

In some embodiments, the first valve 132 may be closed, and the second valve 142 configured to open and close the second connection pipe 144 may be opened. When the vacuum pump 146 operates, negative pressure may be formed inside the gas storage 124. Accordingly, the gas stored in the gas storage 124 may be discharged to outside of the apparatus 120 through the second connection pipe 144 and the vacuum pump 146 due to the negative pressure. Thereafter, the second valve 142 may be closed again.

Although FIG. 4 illustrates the gas collection device 136 and the vacuum pump 146 being disposed at different positions, the present disclosure is not limited thereto. For example, in a case where the gas collection device 136 is detached from the first connection pipe 134 as described above with reference to FIG. 3, the vacuum pump 146 may be connected to the first connection pipe 134 and configured to discharge the gas stored in the gas storage 124 to outside of the apparatus 120. In this case, because the second connection pipe 144 and the second valve 142 are not used, the apparatus for measuring gas pressure may be miniaturized.

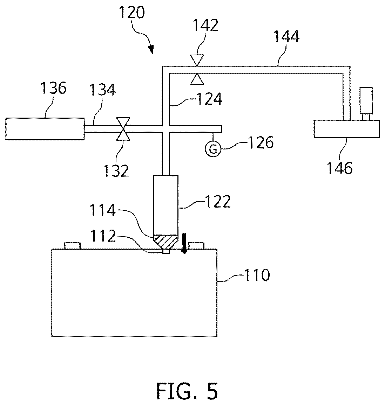

FIG. 5 illustrates an example in which the electrolyte 114 is injected into the secondary battery 110 according to embodiments of the present disclosure. In some embodiments, after the gas stored in the buffer 122 and the gas storage 124 is discharged to outside of the apparatus 120, the electrolyte 114 stored in the buffer 122 may be re-injected into the secondary battery 110 through the liquid injection port 112. The lower end of the buffer 122 may be formed to gradually become narrower (e.g., funnel-shaped) such that all of the electrolyte 114 stored in the buffer 122 may be injected into the secondary battery 110. In other embodiments, the material of the buffer 122 provide for fast drainage such that the electrolyte 114 quickly flows down without remaining on the inner surface of the buffer 122. Accordingly, the electrolyte 114 discharged from the inside of the secondary battery 110 during the formation process may be re-injected into the secondary battery 110 and reused.

FIG. 6 illustrates an example in which the controller 150 controls the current applied to the secondary battery 110 according to embodiments of the present disclosure. In some embodiments, the controller 150 may control the voltage and/or current applied to the secondary battery 110 based on the pressure of the gas measured by the gas pressure measurement device 126. In some embodiments, the controller 150 may close the first valve 132 and the second valve 142 and receive the pressure of the gas measured by the gas pressure measurement device 126. Such gas pressure data may be displayed on a display connected to the controller 150. In some embodiments, by controlling the voltage and/or current applied to the secondary battery 110 based on the measured pressure of the gas, the controller 150 may set/control formation process conditions, such as gas discharge, state of charge (SOC), and vacuum level of the secondary battery 110.

For example, when the gas pressure of the gas storage 124 during the formation process is higher than a predetermined threshold, the controller 150 may reduce the current applied to the secondary battery 110. In some embodiments, when the gas pressure of the gas storage 124 is higher than the predetermined threshold, the controller 150 may operate the vacuum pump 146 to discharge the gas stored in the gas storage 124 to outside of the apparatus 120, thereby enhancing degassing. With this configuration, the gas pressure during the formation process may be measured, and the conditions for the formation process may be set based on the measured gas pressure. Accordingly, accidents due to high gas pressure may be prevented in advance, and the formation process may be performed under optimal conditions.

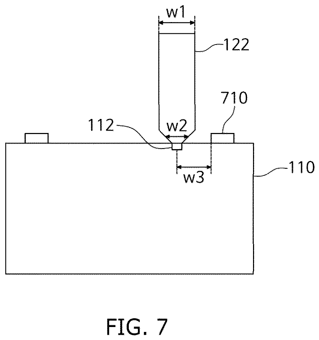

FIG. 7 illustrates an example of the buffer 122 according to embodiments of the present disclosure. In some embodiments, the lower end of the buffer 122 may be formed to gradually become narrower (e.g., be funnel-shaped) such that the electrolyte stored in the buffer 122 may be injected into the secondary battery 110. That is, the diameter (w1) of the upper end of the buffer 122 may be greater than the diameter (w2) of the lower end of the buffer 122.

In some embodiments, the radius (half of w1) of the buffer 122 may be less than the distance (w3) between the liquid injection hole 112 and the terminal 710 so as to prevent interference between the buffer 122 and the device (e.g., a charge/discharge device) connected to the terminal 710 of the secondary battery 110. The volume of the buffer 122 may vary depending on the capacity of the secondary battery 110 such that the electrolyte may be received in the buffer 122. For example, the volume of the buffer 122 may be 20 ml to 120 ml, but the present disclosure is not limited thereto.

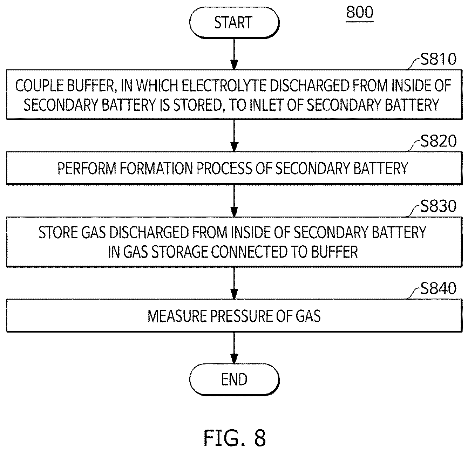

FIG. 8 illustrates a flowchart showing an example of a gas pressure measurement method 800 according to embodiments of the present disclosure. In some embodiments, the gas pressure measurement method 800 may be started by coupling the buffer, in which the electrolyte discharged from the inside of the secondary battery may be stored, to the inlet of the secondary battery (step S810). The capacity of the secondary battery may be 40 Ah or more, but the present disclosure is not limited thereto.

Thereafter, the formation process of the secondary battery may be performed (step S820). In this case, the electrolyte and gas may be discharged from the inside of the secondary battery. The electrolyte discharged from the inside of the secondary battery may be stored in the buffer. In some embodiments, the gas discharged from the inside of the secondary battery may be stored in the buffer and the gas storage. In some embodiments, the volume of the gas storage may be smaller than the volume of the buffer.

Thereafter, the gas discharged from the inside of the secondary battery may be stored in the gas storage connected to the buffer (step S830). In some embodiments, the gas pressure measurement device connected to the gas storage may measure the pressure of the gas (step S840). The gas pressure measurement device may be positioned higher than the buffer. In some embodiments, the voltage and/or the current applied to the secondary battery may be controlled by the controller based on the gas pressure measured by the gas pressure measurement device.

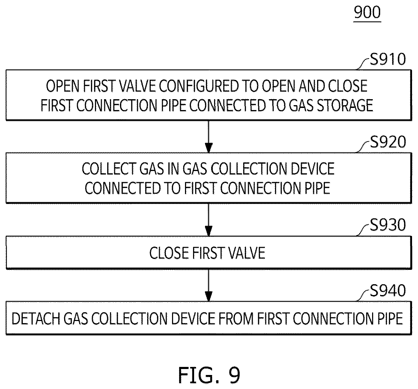

FIG. 9 illustrates a flowchart showing an example of a gas collection method 900 according to embodiments of the present disclosure. In some embodiments, the gas collection method 900 may be started by opening the first valve configured to open and close the first connection pipe connected to the gas storage (step S910). Thereafter, the gas may be collected in the gas collection device connected to the first connection pipe (step S920).

After the gas is collected, the first valve may be closed (step S930). In some embodiments, the gas collection device may be detached from the first connection pipe (step S940). The gas collected in the gas collection device may be used in an external device for component investigation.

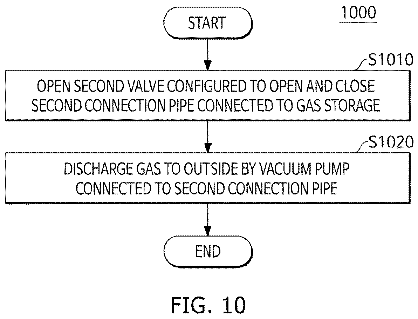

FIG. 10 illustrates a flowchart showing an example of a gas discharge method 1000 according to embodiments of the present disclosure. In some embodiments, the gas discharge method 1000 may be started by opening the second valve configured to open and close the second connection pipe connected to the gas storage (step S1010). In this case, the first valve configured to open and close the first connection pipe connected to the gas storage may be in a closed state. In some embodiments, the vacuum pump connected to the second connection pipe may discharge the gas stored in the gas storage to the outside through the second connection pipe and the vacuum pump (S1020). In this process, the controller may adjust degassing intensity by controlling the operation of the vacuum pump based on the gas pressure measured by the gas pressure measurement device.

The method described above may be provided as a computer program stored in a computer-readable recording medium for causing a computer to execute the method. The medium may continuously store a computer-executable program or may temporarily store a computer-executable program for execution or download. The medium may be a variety of recording or storage means in the form of single hardware or a combination of several pieces of hardware. The medium is not limited to a medium directly connected to a computer system and may be distributed over a network. Examples of the medium may include a magnetic medium such as hard disk, floppy disk, and magnetic tape, an optical recording medium such as compact disc read-only memory (CD-ROM) and digital versatile disc (DVD), a magnetooptical medium such as floptical disk, read-only memory (ROM), random access memory (RAM), and flash memory, and may be configured to store program instructions. Examples of other medium include recording or storage medium managed by application stores that distribute applications, sites or servers that supply or distribute various other software, etc.

The methods, operations or techniques of the present disclosure may be implemented by various means. For example, these techniques may be implemented in hardware, firmware, software, or combinations thereof. Those of ordinary skill in the art will understand that various illustrative logical blocks, modules, circuits, and algorithm steps described in connection with the present disclosure may be implemented in electronic hardware, computer software, or combinations of electronic hardware and computer software. To clearly explain the mutual substitution of hardware and software, various illustrative components, blocks, modules, circuits, and steps have been generally described above in terms of functionality thereof. Whether such functionality is implemented as hardware or software depends on the particular application and design requirements imposed on the overall system. Those of ordinary skill in the art may implement the above-described functionality in various ways for each particular application, but such implementations should not be construed as departing from the scope of the present disclosure.

Hence, in summary, an apparatus for measuring gas pressure of a secondary battery is provided. The apparatus may comprise a buffer configured to be coupled to a liquid injection port of the secondary battery. The buffer may be configured to store an electrolyte discharged from an inside of the secondary battery, e.g. via the liquid injection port by a pressure inside the secondary battery that is greater than a pressure in the environment the secondary battery is placed in. The apparatus may comprise a gas storage. The gas storage may be connected to the buffer. The gas storage may be configured to store gas discharged from the inside of the secondary battery. The apparatus may comprise a gas pressure measurement device. The gas pressure measurement device may be connected to the gas storage. The gas pressure measurement device may be configured to measure a pressure of the gas, e.g. of the gas in the gas storage. The pressure of the gas in the gas storage may correspond to, at least be similar or at least be indicative of the pressure of the gas inside the secondary battery.

In a hardware implementation, the processing units used to perform the techniques may be implemented in one or more application-specific integrated circuits (ASICs), digital signal processors (DSPs), graphics processing units (GPUs), digital signal processing devices (DSPDs), programmable logic devices (PLDs), field programmable gate arrays (FPGAs), processors, controllers, microcontrollers, microprocessors, electronic devices, and other electronic units designed to perform the functions described in the present disclosure, computers, or combinations thereof.

Accordingly, various exemplary logical blocks, modules, and circuits described in connection with the present disclosure may be implemented or executed by general-purpose processors, DSPs, ASICs, FPGAs or other programmable logic devices, discrete gate or transistor logic, discrete hardware components, or combinations of those designed to perform the functions described in the present disclosure. The general-purpose processor may be a microprocessor, but as an alternative, the processor may be any conventional processor, controller, microcontroller, or state machine. The processor may also be implemented as a combination of computing devices, for example, a combination of a DSP and a microprocessor, a plurality of microprocessors, one or more microprocessors in conjunction with a DSP core, or any other configuration.

In implementing firmware and/or software, the techniques may be implemented as instructions stored on a computer-readable medium, such as RAM, ROM, non-volatile random access memory (NVRAM), programmable read-only memory (PROM), erasable programmable read-only memory (EPROM), electrically erasable PROM (EEPROM), flash memory, compact disc (CD), magnetic or optical data storage device. The instructions may be executable by one or more processors and may cause the processor(s) to perform certain aspects of the functionality described in the present disclosure.

When implemented in software, the techniques may be stored on or transmitted through a computer-readable medium as one or more instructions or code. Computer-readable media include both computer storage media and communication media, including any medium that facilitates transmission of computer programs from one place to another. Storage media may be any available media that may be accessed by a computer. As a non-limiting example, these computer-readable media may include RAM, ROM, EEPROM, CD-ROM or other optical disk storage, magnetic disk storage or other magnetic storage devices, or any other medium that may be accessed by a computer and may be used to transmit or store the desired program code in the form of instructions or data structures. Any connection may be appropriately made to a computer-readable medium.

For example, when software is transmitted from a website, a server, or other remote source by using coaxial cable, fiber optic cable, twisted wire, digital subscriber line (DSL), or wireless technologies such as infrared, radio, and microwave, the coaxial cable, fiber optic cable, twisted wire, DSL, or wireless technologies such as infrared, radio, and microwave are included within the definition of the medium. As used herein, disk and disc include CD, laser disk, optical disk, DVD, floppy disk, and Blu-ray disk. Disks usually reproduce data magnetically, while discs reproduce data optically by using lasers. Combinations of those mentioned above should also fall within the scope of computer-readable media.

The software module may reside in RAM memory, flash memory, ROM memory, EPROM memory, EEPROM memory, registers, hard disk, removable disk, CD-ROM, or any other form of known storage media. An exemplary storage medium may be connected to the processor such that the processor may read information from or write information to the storage medium. Alternatively, the storage medium may be integrated into the processor. The processor and the storage medium may reside within an ASIC. The ASIC may exist within a user terminal. Alternatively, the processor and the storage medium may exist as separate components in a user terminal.

Although the above-described embodiments have been described as utilizing aspects of the disclosed subject matter in one or more standalone computer systems, the present disclosure is not limited thereto and may also be implemented in conjunction with any computing environment, such as a network or distributed computing environment. Furthermore, aspects of the subject matter of the present disclosure may be implemented in a plurality of processing chips or devices, and storage may be similarly effected across a plurality of devices. These devices may include PCs, network servers, and portable devices.

Although the present disclosure has been described above with respect to embodiments thereof, the present disclosure is not limited thereto. Various modifications and variations can be made thereto by those skilled in the art within the spirit of the present disclosure and the equivalent scope of the appended claims.

### [DESCRIPTION OF SOME REFERENCE SYMBOLS]

110: secondary battery
112: inlet
114: electrolyte
120: apparatus for measuring gas pressure
122: buffer
124: gas storage
126: gas pressure measurement device
132: first valve
134: first connection pipe
136: gas collection device
142: second valve
144: second connection pipe
146: vacuum pump
150: controller

## Claims

1. An apparatus (120) for measuring gas pressure of a secondary battery (110), the apparatus (120) comprising:
a buffer (122) configured to be coupled to a liquid injection port (112) of the secondary battery (110) and configured to store an electrolyte (114) discharged from an inside of the secondary battery (110);
a gas storage (124) connected to the buffer (122) and configured to store gas discharged from the inside of the secondary battery (110); and
a gas pressure measurement device (126) connected to the gas storage (124) and configured to measure a pressure of the gas.

2. The apparatus (120) as claimed in claim 1, wherein, in an operative configuration with the buffer (122) coupled to the secondary battery (110), the gas pressure measurement device (126) is positioned higher than the buffer (122).

3. The apparatus (120) as claimed in claim 1 or 2, further comprising:
a connection pipe (134) connected to the gas storage (124);
a valve (132) configured to open and close the connection pipe (134); and
a gas collection device (136) connected to the connection pipe (134).

4. The apparatus (120) as claimed in claim 3, wherein the gas collection device (136) is detachably attached to the connection pipe (134).

5. The apparatus (120) as claimed in any of claims 1 to 4, further comprising:
a connection pipe (144) connected to the gas storage (124);
a valve (142) configured to open and close the connection pipe (144); and
a vacuum pump (146) connected to the connection pipe (144).

6. The apparatus (120) as claimed in claim 5, wherein the vacuum pump (146) is configured to discharge the gas stored in the gas storage (124) to outside of the apparatus (120).

7. The apparatus (120) as claimed in any of claims 1 to 6, wherein the secondary battery (110) has a capacity of 40 Ah or more.

8. The apparatus (120) as claimed in any of claims 1 to 7, wherein the gas storage (124) is detachably attached to the buffer (122), and
wherein the gas storage (124) is configured to be coupled to the liquid injection port (112) of the secondary battery (110) when the buffer (122) is detached from the gas storage (124).

9. The apparatus (120) as claimed in any of claim 1 to 8, wherein a volume of the gas storage (124) is less than a volume of the buffer (122).

10. The apparatus (120) as claimed in any of claims 1 to 9, wherein a radius of the buffer (122) is configured to be less than a distance between the liquid injection port (112) of the secondary battery (110) and a terminal (710) of the secondary battery (110).

11. The apparatus (120) as claimed in any of claims 1 to 10, wherein the buffer (122) is configured to inject the electrolyte (114) stored in the buffer (122) into the secondary battery (110) through the liquid injection port (112).

12. The apparatus (120) as claimed in any of claims 1 to 11, further comprising a controller (150) configured to control a current applied to the secondary battery (110) based on the pressure of the gas measured by the gas pressure measurement device (126).

13. The apparatus (120) as claimed in any of claims 3 to 11 when depending from claim 3, wherein the connection pipe is a first connection pipe (134) and the valve is a first valve (132),
wherein the apparatus (120) further comprises:
a second connection pipe (144) connected to the gas storage (124);
a second valve (142) configured to open and close the second connection pipe (144);
a vacuum pump (146) connected to the second connection pipe (144); and
a controller (150) configured to control the first valve (132), the second valve (142), and the vacuum pump (146), and
wherein the controller (150) is configured to close the first valve (132) and the second valve (142) in a first mode and receive the pressure of the gas measured by the gas pressure measurement device (126).

14. The apparatus (120) as claimed in claim 13, wherein the controller (150) is configured to collect the gas in the gas collection device (136) by opening the first valve (132) and closing the second valve (142) in a second mode.

15. The apparatus (120) as claimed in claim 13 or 14, wherein the controller (150) is configured to discharge the gas to outside of the apparatus (120) by closing the first valve (132), opening the second valve (142) and operating the vacuum pump (146) in a third mode.
